# EUROPÄISCHE PATENTSCHRIFT

(11) **EP 1 712 397 B1**
(45) Veröffentlichungstag und Bekanntmachung des Hinweises auf die Patenterteilung: **01.12.2010**
(21) Anmeldenummer: 06100175.6
(22) Anmeldetag: 09.01.2006
(51) Int. Cl.: B60K 15/03

(54) **Fördereinrichtung zum Fördern von Kraftstoff**
Device for supplying fuel
Dispositif d'alimentation en carburant

(30) Priorität: 15.04.2005 DE 102005017520
(43) Veröffentlichungstag der Anmeldung: 18.10.2006
(73) Patentinhaber: Continental Automotive GmbH, 30165 Hannover (DE)
(72) Erfinder: Kohlhaas, Helmut, 36208 Wildeck (DE); Ludwig, Norbert, 55124 Mainz (DE)

(56) Entgegenhaltungen:
- DE-C1- 19 819 117
- JP-A- 2003 097 373
- JP-A- 2006 009 728

## Beschreibung

Die Erfindung betrifft eine Fördereinrichtung zum Fördern von Kraftstoff aus einem Kraftstoffbehälter zu einer Brennkraftmaschine eines Kraftfahrzeuges mit einem in einer Öffnung des Kraftstoffbehälters zu befestigenden Flansch, mit einem zur Vorspannung gegen den Boden des Kraftstoffbehälters vorgesehenen Schwalltopf zum Sammeln von Kraftstoff und mit einer Stütze zur Halterung des Schwalltopfes in seiner vorgesehenen Lage.

Solche Fördereinrichtungen werden in heutigen Kraftfahrzeugen häufig eingesetzt und sind aus der Praxis bekannt. Bei der bekannten Fördereinrichtung ist die Stütze teleskopartig gestaltet und weist ein Federelement zur Vorspannung des Schwalltopfes gegen den Boden des Kraftstoffbehälters auf. Die teleskopartige Gestaltung der Stütze und das Federelement ermöglichen einen Toleranzausgleich zwischen der in der oberen Wandung des Kraftstoffbehälters angeordneten Öffnung und dem Boden des Kraftstoffbehälters. Die Stütze der bekannten Fördereinrichtung ist zudem über ein Gelenk an einem mit dem Schwalltopf verbundenen Stützfuß angelenkt. Der Stützfuß ist erforderlich, um die Einleitung eines Kippmomentes in den gegen den Boden des Kraftstoffbehälters vorgespannten Schwalltopf zu vermeiden. Diese Gestaltung ermöglicht bei den heutigen meist sehr flachen Kraftstoffbehältern und großen Schwalltöpfen ein einfaches Einführen des Schwalltopfes durch die Öffnung, da bei der Montage der Schwalltopf gegenüber der Stütze um das Gelenk verschwenkt werden kann. Ist der Schwalltopf in den Kraftstoffbehälter eingefädelt, wird der Schwalltopf in seine vorgesehene Lage im Kraftstoffbehälter eingeschwenkt. Die bekannte Fördereinrichtung ermöglicht bei einem schmalen langen Schwalltopf eine sehr kleine Öffnung im Kraftstoffbehälter und damit eine einfache Abdichtung des Kraftstoffbehälters.

Nachteilig bei der bekannten Fördereinrichtung ist jedoch, dass sie aus sehr vielen Bauteilen besteht und aufwändig zu fertigen ist.

Aus der JP 2003-97373 A ist eine Fördereinrichtung nach dem Oberbegriff von Anspruch 1 bekannt, welche eine biegsame Stütze aufweist, die keinerlei Führung besitzt.

Der Erfindung liegt das Problem zugrunde, eine Fordereinrichtung der eingangs genannten Art so weiterzubilden, dass sie besonders einfach aufgebaut ist und dass eines Kippmomentes in den Schwalltopf einfach vermeiden lässt.

Dieses Problem wird erfindungsgemäß dadurch gelost, dass die Stütze eine Lagerung an dem Schwalltopf hat, und der Schwalltopf neben der Lagerung ein Stützelement zur seitlichen Abstützung der Stütze im im Kraftstoffbehälter montierten Zustand hat.

Durch diese Gestaltung erfordert die erfindungsgemäße Fördereinrichtung mit der elastischen Stütze eine einziges Bauteil zur Halterung des Schwalltopfes an dem Boden des Kraftstoffbehälters. Durch eine entsprechende Anlenkung der Stütze an dem Schwalltopf lässt sich zudem die Einleitung eines Kippmomentes in den Schwalltopf vermeiden. Die Anordnung eines Stützfußes zwischen der Stütze und dem Schwalltopf und Teleskopelemente innerhalb der Stütze sind dank der Erfindung nicht erforderlich. Die erfindungsgemäße Fördereinrichtung ist daher besonders einfach aufgebaut und benötigt nur wenige Bauteile. Weiterhin wird eine gleichmäßige kippfreie Vorspannung des Schwalltopfes gegen den Boden des Kraftstoffbehälters erreicht.

Eine zuverlässige Halterung des Schwalltopfes innerhald des Kraftstoffbehälters lässt sich gemäß einer vorteilhaften Weiterbildung der Erfindung einfach sicherstellen, wenn die Stütze in einer ersten Richtung elastisch und in einer zweiten, quer zu der ersten Richtung weisenden Richtung biegensteif ausgebildet ist.

Die Stütze könnte beispielsweise beim Einführen des Schwalltopfes durch die öffnung in den Kraftstoffbehälter aufgebogen werden. Zur Vereinfachung der Montage des Schwalltopfes trägt es jedoch gemäß einer anderen vorteilhaften Weiterbildung der Erfindung bei, wenn die Stütze eine Lagerung an dem Schwalltopf hat. Ein weiterer Vorteil dieser Gestaltung besteht darin, dass hierdurch die Gefahr eines Verkippens des Schwalltopfes besonders gering gehalten wird.

Eine im Wesentlichen vertikale Einleitung von Kraften in den Schwalltopf durch die Stütze lässt sich einfach erreichen, wenn das Stützelement und die Lagerung in einem mittleren Bereich des Schwalltopfes angeordnet sind.

Die erfindungsgemäße Fördereinheit gestaltet sich konstruktiv besonders einfach, wenn die Stütze eine Blattfeder aufweist. Die Blattfeder ermöglicht auf besonders einfache Weise die elastische Gestaltung der Stütze in der ersten Richtung bei gleichzeitiger Biegesteifheit quer zu der ersten Richtung. Die Blattfeder ist vorzugsweise aus Federstahl gefertigt.

Die Anlenkung der Stütze an dem Schwalltopf erfordert einen besonders geringen baulichen Aufwand, wenn die Lagerung einen an dem Schwalltopf angeordneten Bolzen hat. Da der Schwalltopf meist ohnehin aus Kunststoff im Spritzgussverfahren gefertigt wird, lässt sich der Bolzen der Lagerung im Spritzgussverfahren erzeugen. Vorzugsweise wird das Stützelement ebenfalls an dem Schwalltopf im Spritzgussverfahren gefertigt.

Die Bildung der Lagerung der Stütze an dem Schwalltopf gestaltet sich gemäß einer anderen vorteilhaften Weiterbildung der Erfindung baulich besonders einfach, wenn ein Ende der Blattfeder um den Bolzen herumgeführt ist.

Im montierten Zustand ist der Schwalltopf gemäß einer anderen vorteilhaften Weiterbildung der Erfindung besonders zuverlässig in seiner vorgesehenen Lage im Kraftstoffbehälter gehalten, wenn die Stütze an dem Flansch unverschieblich und unverdrehbar befestigt ist. Die Stütze ist vorzugsweise in den Flansch eingepresst oder mit diesem stoffschlüssig verbunden.

Die Befestigung der Stütze an dem Flansch gestaltet sich gemäß einer anderen vorteilhaften Weiterbildung konstruktiv besonders einfach, wenn die Stütze an ihrem mit dem Flansch verbundenen Ende einen unrunden Querschnitt hat. Vorzugsweise ist der unrunde Querschnitt ein Vierkant.

Der Schwalltopf wird gemäß einer anderen vorteilhaften Weiterbildung der Erfindung zuverlässig gegenüber dem Flansch geführt und gegen ein seitliches Kippen abgestützt, wenn zwei Stützen auf einander gegenüberliegenden Seiten des Schwalltopfes angeordnet sind.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch eine Schnittdarstellung eines Kraftstoffbehälters mit einer erfindungsgemäßen Fördereinrichtung,
- Fig. 2: schematisch eine Schnittdarstellung durch den Kraftstoffbehälter aus Figur 1 entlang der Linie II - II,
- Fig. 3: die Fördereinrichtung aus Figur 1 während der Montage in dem Kraftstoffbehälter.

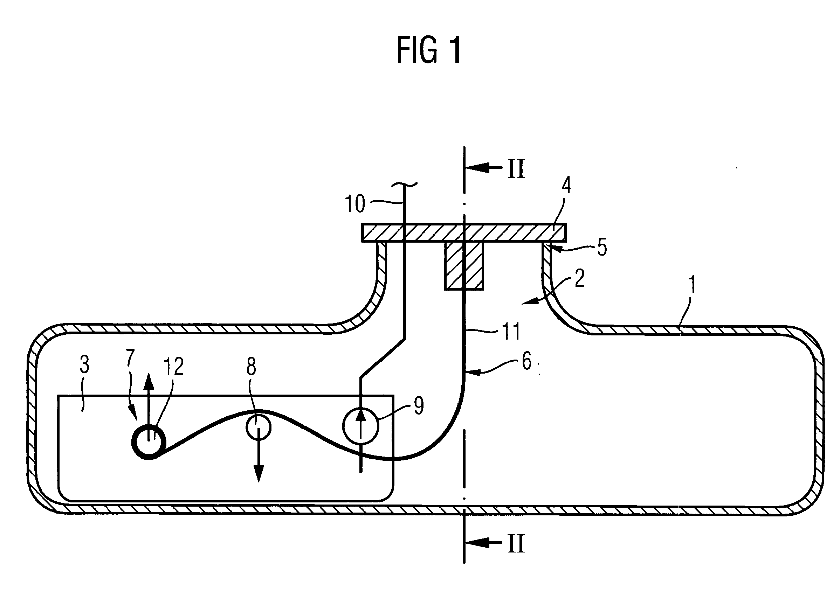

Figur 1 zeigt einen Kraftstoffbehälter 1 mit einer darin angeordneten Fördereinrichtung 2 zum Fördern von Kraftstoff aus dem Kraftstoffbehälter 1 eines Kraftfahrzeuges. Die Fördereinrichtung 2 weist einen gegen den Boden des Kraftstoffbehälters vorgespannten Schwalltopf 3 auf. Ein Flansch 4 ist in eine Öffnung 5 des Kraftstoffbehälters 1 dichtend eingesetzt und mit einer Stütze 6 verbunden. Die Stütze 6 hat eine Lagerung 7 an dem Schwalltopf 3 und liegt in einem mittleren Bereich an einem mit dem Schwalltopf 3 verbundenen Stützelement 8 an. Schematisch ist in dem Schwalltopf 3 eine Kraftstoffpumpe 9 zum Fördern von Kraftstoff aus dem Schwalltopf 3 über eine flexible, durch den Flansch 4 hindurch geführte Leitung 10 zu einer nicht dargestellten Brennkraftmaschine des Kraftfahrzeuges dargestellt. Selbstverständlich können innerhalb des Kraftstoffbehälters 1 weitere Bauteile, wie beispielsweise eine Saugstrahlpumpe befestigt sein, welche Kraftstoff aus dem Kraftstoffbehälter 1 in den Schwalltopf 3 fördert.

Die Stütze 6 weist eine in dem Flansch 4 eingespannte Blattfeder 11 auf, welche über das Stützelement 8 zu der Lagerung 7 geführt ist. Die Lagerung 7 weist einen an dem Schwalltopf 3 befestigten Bolzen 12 auf, um den ein Ende der Blattfeder 11 herumgeführt ist. Das Stützelement 8 ist als Vorsprung des Schwalltopfes 3 ausgebildet. Die Blattfeder 11 ist in vertikaler Richtung des Schwalltopfes 3 elastisch ausgebildet und parallel zu dem Bolzen 12 der Lagerung 7 relativ biegesteif und hat einen rechteckigen Querschnitt. Damit hat die Blattfeder 11 eine unverdrehbare Befestigung in dem Flansch 4.
Durch die Elastizität der Blattfeder 11 der Stütze 6 wird der Schwalltopf 3 gegen den Boden vorgespannt. Zur Verdeutlichung sind in der Zeichnung die von der Stütze 6 in den Schwalltopf 3 eingeleiteten Kräfte mit Pfeilen gekennzeichnet.

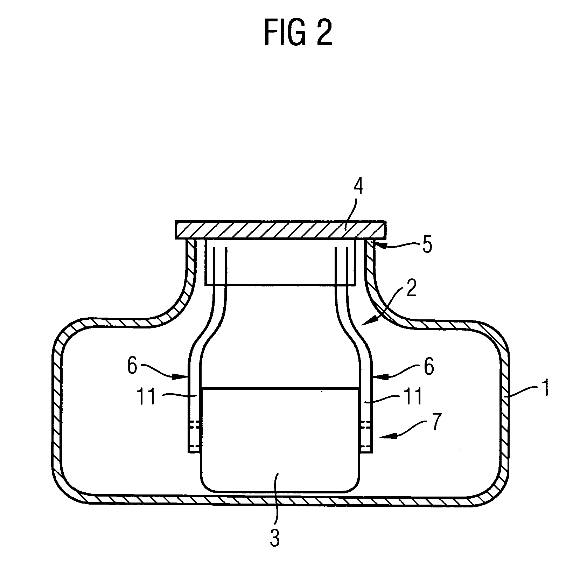

Figur 2 zeigt den Kraftstoffbehälter 1 mit der Fördereinrichtung 2 aus Figur 1 in einer Schnittdarstellung entlang der Linie II - II. Hierbei ist zu erkennen, dass insgesamt zwei Stützen 6 vorgesehen sind, welche an jeder Seite des Schwalltopfes 3 angelenkt sind. Damit wird der Schwalltopf 3 kippfrei in dem Kraftstoffbehälter 1 gehalten.

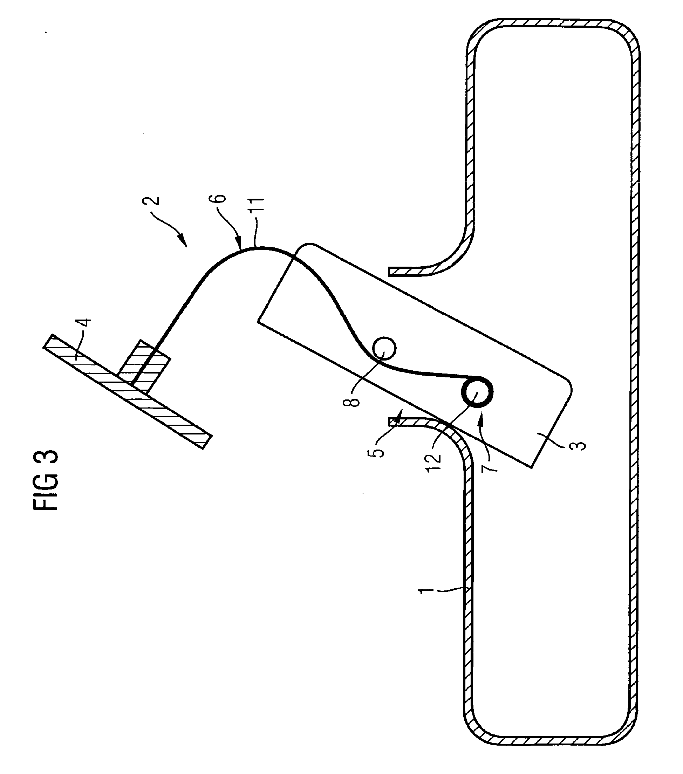

Der Fördereinrichtung 3 aus Figur 1 ist während der Montage im Kraftstoffbehälter 1 in Figur 3 dargestellt. Hierbei ist zu erkennen, dass die Stütze 6 um die Lagerung 7 an dem Schwalltopf 3 verschwenkt werden kann. Dabei hebt der in Figur 1 an dem Stützelement 8 anliegende Bereich der Stütze 6 von dem Stützelement 8 ab. Der Schwalltopf 3 wird durch Verschwenken der Stütze 6 an der Lagerung 7 verschwenkt und durch die Öffnung 5 im Kraftstoffbehälter 1 eingefädelt. Wenn abschließend der Flansch 4 in der Öffnung 5 befestigt wird, ist der Schwalltopf 3 in seiner im Kraftstoffbehälter 1 vorgesehenen Lage gehalten.

## Patentansprüche

1. Fördereinrichtung zum Fördern von Kraftstoff aus einem Kraftstoffbehälter (1) zu einer Brennkraftmaschine eines Kraftfahrzeuges mit einem in einer Öffnung (5) des Kraftstoffbehälters (1) zu befestigenden Flansch (4) mit einem am Boden des Kräftstoffbehälters vorgesehenen Schwalltopf (3) zum Sammeln von Kraftstoff, mit einer Stütze (6) zur Halterung des Schwalltopfes (3) in seiner vorgesehenen Lage unter Vorspannung gegen den Boden, wobei die Stutze als elastisch federndes, den Flansch mit dem Schwalltopf verbindendes Bauteil gestaltet ist **dadurch gekennzeichnet, dass** die Stütze (6) eine Lagerung (7) an dem Schwalltopf (3) hat, und dass der Schwalltopf (3) neben der Lagerung (7) ein Stützelement (8) zur seitlichen Abstützung der Stütze (6) im im Kraftstoffbehälter (1) montierten Zustand hat.

2. Fördereinrichtung nach Anspruch 1, **dadurch gekennzeichnet, dass** die Stütze (6) in einer ersten Richtung elastisch und in einer zweiten, quer zu der ersten Richtung weisenden Richtung, biegesteif ausgebildet ist.

3. Fördereinrichtung nach einem der vorhergehenden Ansprüche, **dadurch gekennzeichnet, dass** das Stützelement (8) und die Lagerung (7) in einem mittleren Bereich des Schwalltopfes (3) angeordnet sind.

4. Fördereinrichtung nach einem der vorheregehenden Ansprüche, **dadurch gekennzeichnet, dass** die stütze (6) eine Blattfeder (11) aufweist.

5. Fördereinrichtung nach einem der vorhergehenden Ansprüche, **dadurch gekennzeichnet, dass** die Lagerung (7) einen an dem Schwalltopf (3) angeordneten Bolzen (12) hat.

6. Fördereinrichtung nach einem der vorhergehenden Ansprüche, **dadurch gekennzeichnet, dass** ein Ende der Blattfeder (11) um den Bolzen (12) herumgeführt ist.

7. Fördereinrichtung nach einem der vorhergehenden Ansprüche, **dadurch gekennzeichnet, dass** die Stütze (6) an dem Flansch (4) unverschieblich und unverdrehbar befestigt ist.

8. Fördereinrichtung nach einem der vorhergehenden Ansprüche, **dadurch gekennzeichnet, dass** die Stütze (6) an ihrem mit dem Flansch (4) verbundenen Ende einen unrunden Querschnitt hat .

9. Fördereinrichtung nach einem der vorhergehenden Ansprüche, **dadurch gekennzeichnet, dass** zwei Stützen (6) auf einander gegenüberliegenden Seiten des Schwalltopfes (3) angeordnet sind.

## Claims

1. Supply device for supplying fuel from a fuel tank (1) to an internal combustion engine of a motor vehicle, with a flange (4) which is to be fastened in an opening (5) in the fuel tank (1), with an anti-surge pot (3), which is provided on the bottom of the fuel tank, for collecting fuel, and with a support (6) for supporting the anti-surge pot (3) in the designated position thereof under prestress against the bottom, wherein the support is designed as an elastically resilient component connecting the flange to the anti-surge pot, **characterized in that** the support (6) has a mounting (7) on the anti-surge pot (3), and, next to the mounting (7), the anti-surge pot (3) has a supporting element (8) for laterally supporting the support (6) in the state fitted in the fuel tank (1).

2. Supply device according to Claim 1, **characterized in that** the support (6) is designed to be elastic in a first direction and to be flexurally rigid in a second direction pointing transversely with respect to the first direction.

3. Supply device according to one of the preceding claims, **characterized in that** the supporting element (8) and the mounting (7) are arranged in a central region of the anti-surge pot (3).

4. Supply device according to one of the preceding claims, **characterized in that** the support (6) has a leaf spring (11).

5. Supply device according to one of the preceding claims, **characterized in that** the mounting (7) has a bolt (12) arranged on the anti-surge pot (3).

6. Supply device according to one of the preceding claims, **characterized in that** one end of the leaf spring (11) is guided around the bolt (12).

7. Supply device according to one of the preceding claims, **characterized in that** the support (6) is fastened nondisplaceably and nonrotateably to the flange (4).

8. Supply device according to one of the preceding claims, **characterized in that** the support (6) has a non-circular cross section at the end thereof, which is connected to the flange (4).

9. Supply device according to one of the preceding claims, **characterized in that** two supports (6) are arranged on mutually opposite sides of the anti-surge pot (3).

## Revendications

1. Dispositif d'alimentation permettant de transférer du carburant d'un réservoir de carburant (1) vers un moteur à combustion interne d'un véhicule automobile, comportant une bride (4) à fixer dans une ouverture (5) du réservoir de carburant (1), un pot de compensation (3) prévu au fond du réservoir de carburant et destiné à accumuler du carburant, un support (6) destiné à maintenir le pot de compensation (3) dans une position prévue avec une force précontrainte contre le fond, le support étant réalisé sous forme de pièce élastique liant la bride au pot de compensation (3), **caractérisé par le fait que** le support (6) a une assise (7) sur le pot de compensation et que le pot de compensation (3) a, en plus de son assise (7), un élément d'appui (8) pour le soutien latéral du support (6) dans son état installé dans le réservoir de carburant (1).

2. Dispositif d'alimentation selon la revendication 1, **caractérisé par le fait que** le support (6) est élastique dans une première direction et est rigide en flexion dans une deuxième direction perpendiculaire à la première direction.

3. Dispositif d'alimentation selon l'une des revendications précédentes, **caractérisé par le fait que** l'élément d'appui (8) et l'assise (7) sont placés dans une zone centrale du pot de compensation (3).

4. Dispositif d'alimentation selon l'une des revendications précédentes, **caractérisé par le fait que** le support (6) comporte un ressort à lames (11).

5. Dispositif d'alimentation selon l'une des revendications précédentes, **caractérisé par le fait que** l'assise (7) a un tourillon (12) monté sur le pot de compensation (3) .

6. Dispositif d'alimentation selon l'une des revendications précédentes, **caractérisé par le fait qu'**une extrémité du ressort à lames (11) passe autour du tourillon (12).

7. Dispositif d'alimentation selon l'une des revendications précédentes, **caractérisé par le fait que** le support (6) est fixé sur la bride (4) de façon qu'il ne peut être ni déplacé, ni pivoté.

8. Dispositif d'alimentation selon l'une des revendications précédentes, **caractérisé par le fait que** le support (6) a une section transversale non ronde à son extrémité liée à la bride (4).

9. Dispositif d'alimentation selon l'une des revendications précédentes, **caractérisé par le fait que** deux supports (6) sont placés sur des côtés se faisant face du pot de compensation (3).
